# EUROPÄISCHE PATENTSCHRIFT

(11) **EP 0 896 893 B1**
(45) Veröffentlichungstag und Bekanntmachung des Hinweises auf die Patenterteilung: **23.04.2003**
(21) Anmeldenummer: 98114490.0
(22) Anmeldetag: 01.08.1998
(51) Int. Cl.: B60K 17/00

(54) **Lastschaltgetriebe für eine fahrbare Arbeitsmaschine**
Power shift transmission for a mobile work machine
Transmission à changement de vitesse sous puissance pour une machine de travail mobile

(30) Priorität: 12.08.1997 DE 19734825
(43) Veröffentlichungstag der Anmeldung: 17.02.1999
(73) Patentinhaber: Spicer Off-Highway Belgium N.V., B-8200 Brugge (BE)
(72) Erfinder: Pecceu, Hendrik, 8840 Oostnieuwkerke (BE)
(74) Vertreter: Patentanwälte Rehberg + Hüppe

(56) Entgegenhaltungen:
- EP-A- 0 310 873
- DE-A- 4 402 947
- DE-C- 4 311 084

## Beschreibung

Die Erfindung betrifft ein Lastschaltgetriebe für eine fahrbare Arbeitsmaschine, insbesondere für ein Fahrzeug der Land- oder Bauwirtschaft, mit einer von einem Verbrennungsmotor angetriebenen Eingangswelle und einer Ausgangswelle, zwischen denen mindestens ein hydrostatischer Antriebszweig und mindestens ein mechanischer Antriebszweig parallel zueinander vorgesehen sind. Es wird auch ein Verfahren zum Steuern eines Lastschaltgetriebes für eine fahrbare Arbeitsmaschine, insbesondere für ein Fahrzeug der Land- oder Bauwirtschaft, aufgezeigt, bei dem ein Teil der Leistung über einen mechanischen Antriebszweig und der andere Teil der Leistung über einen einen Hydromotor aufweisenden hydrostatischen Antriebszweig auf eine gemeinsame Ausgangswelle übertragen werden.

Aus dem Prospekt der Firma Xaver Fendt GmbH & Co. "Favorit 926", Ausgabe E 11/95/10, ist ein gattungsgemäßes Lastschaltgetriebe bekannt, welches insgesamt durch eine an der Eingangswelle vorgesehene Kupplung steuerbar ist. Der Kupplung ist ein Planetenradgetriebe nachgeschaltet, mit dem eine Leistungsaufteilung möglich ist. Dem Planetenradgetriebe ist ein hydrostatischer Antriebszweig und ein mechanischer Antriebszweig in Parallelanordnung nachgeschaltet, deren beide Leistungsteile über eine summierende Ausgangswelle zusammengeführt werden. Im hydrostatischen Antriebszweig ist eine im Schwenkwinkel verstellbare Axialkolbenpumpe vorgesehen, mit der zwei nur gemeinsam im Schwenkwinkel verstellbare Axialkolbenmotore ansteuerbar sind, um eine große Übersetzung zu erreichen. Die beiden Axialkolbenmotore arbeiten auf die eine summierende Ausgangswelle. Dieser Ausgangswelle ist eine Bereichswelle nachgeschaltet, die über eine mechanische Kupplung wahlweise über eine von zwei Getriebestufen mit der Ausgangswelle verbindbar ist. Bei niedrigen Drehzahlen der Ausgangswelle entsprechend niedrigen Fahrgeschwindigkeiten findet eine Leistungsaufteilung mit Hilfe des Planetenradgetriebes statt, indem ca. 75 % der Leistung über den hydrostatischen Antriebszweig und etwa 25 % der Leistung über den mechanischen Antriebszweig übertragen werden. Damit wirkt sich der relativ niedrige Wirkungsgrad in dem hydrostatischen Antriebszweig maßgeblich nachteilig aus. Die Fahrgeschwindigkeit ist immer von der Motordrehzahl abhängig, da eine direkte Kupplung über den mechanischen Antriebszweig gegeben ist. Bei hohen Drehzahlen entsprechend hoher Fahrgeschwindigkeiten werden die Axialkolbenmotore auf den Schwenkwinkel 0 verschwenkt und blockieren damit die Axialkolbenpumpe. Damit entstehen im hydrostatischen Antriebszweig hohe Drücke und eine entsprechend hohe Verlustleistung. Außerdem werden über die Ausgangswelle die Axialkolbenmotore angetrieben. Damit entsteht ein weiterer Anteil an Verlustleistung. Im Fahrzustand bei hohen Geschwindigkeiten wird zwar vorteilhaft der hohe Wirkungsgrad des mechanischen Antriebszweiges genutzt; dieser ist jedoch immer mit den Verlusten im hydrostatischen Antriebszweig behaftet bzw. belastet.

Aus der DE-C-43 11 084 ist ein Schaltgetriebe für eine fahrbare Arbeitsmaschine bekannt, insbesondere eine Antriebseinrichtung eines Fahrzeugs, mit einer von einem Verbrennungsmotor angetriebenen Eingangswelle, einem herkömmlichen Schaltgetriebe und einer Ausgangswelle. Dem herkömmlichen Schaltgetriebe ist ein hydrostatisch-mechanisches Vorschaltgetriebe vorgeordnet. Das Vorschaltgetriebe weist einen mechanischen Antriebszweig auf. Parallel zu dem mechanischen Antriebszweig sind zwei Hydrostatmaschinen vorgesehen, die wechselweise als Motor und Pumpe betrieben werden.

Der Erfindung liegt die Aufgabe zugrunde, ein Lastschaltgetriebe der eingangs beschriebenen Art zu schaffen, welches einen hohen Wirkungsgrad - auch bei geringen Ausgangsgeschwindigkeiten - aufweist.

Erfindungsgemäß wird dies bei einem Lastschaltgetriebe der eingangs beschriebenen Art dadurch erreicht, daß in der Parallelanordnung zwei separate hydrostatische Antriebszweige vorgesehen sind, die jeweils eine separate Welle aufweisen und über Synchronisiereinrichtungen und Getriebestufen mit der Ausgangswelle kuppelbar sind, und daß sowohl der mechanische Antriebszweig als auch die beiden hydrostatischen Antriebszweige je eine eingangsseitig angeordnete und unter Last schaltbare Kupplung aufweisen.

Die Erfindung geht von dem Gedanken aus, unabhängig davon, ob innerhalb des Lastschaltgetriebes ein oder mehrere mechanische Antriebszweige vorgesehen sind, diesen Antriebszweigen auf jeden Fall zwei hydrostatische Antriebszweige parallelzuschalten. Jeder mechanische Antriebszweig und jeder hydrostatische Antriebszweig weist eingangsseitig je eine unter Last schaltbare Kupplung auf, so daß die Möglichkeit besteht, zu jedem beliebigen Zeitpunkt während der Fahrt und/oder der Arbeit dem betreffenden Zweig zu- oder abzuschalten. Die beiden hydrostatischen Antriebszweige besitzen in der Regel jeweils mehrere Synchronisiereinrichtungen. Jeder Synchronisiereinrichtung ist mindestens eine Getriebestufe nachgeordnet. Unter dem Begriff "Kupplung" wird eine unter Last schaltbare Kupplung verstanden. Unter dem Begriff "Synchronisiereinrichtung" wird eine "Kupplung" verstanden, die nur dann schaltbar ist, wenn sie lastfrei ist. In der Regel wird eine solche Synchronisiereinrichtung durch Synchronisierringe realisiert, die lastfrei auf synchrone Drehzahlen gebracht werden können. Dadurch, daß zwei hydrostatische Antriebszweige vorgesehen sind, besteht immer die Möglichkeit, Drehmoment über einen der beiden hydrostatischen Antriebe bei eingerückter Kupplung über die auf ihm angeordnete Synchronisiereinrichtung und die nachgeschaltete Getriebestufe auf die Ausgangswelle zu übertragen, während die Kupplung des anderen hydrostatischen Zweiges ausgerückt ist, so daß dessen Synchronisiereinrichtungen lastfrei sind und damit vorbereitend betätigt werden können. Auch der oder die mechanischen Antriebszweige besitzen jeweils eine unter Last schaltbare Kupplung, die jeweils am Eingang des betreffenden mechanischen Antriebszweiges angeordnet ist, so daß auch dieser mechanische Antriebszweig jederzeit ein- oder ausgeschaltet werden kann, was gleichbedeutend mit der Drehmomentübertragung über den betreffenden mechanischen Antriebszweig ist. Jeder mechanische Antriebszweig kann - zumindest für eine begrenzte Zeit - zusammen mit einem der hydrostatischen Antriebszweige genutzt werden, wie es zur Änderung einer Fahr- und/oder Arbeitsgeschwindigkeit erforderlich ist. Ist die neue Fahr- bzw. Arbeitsgeschwindigkeit erreicht, erfolgt die Drehmomentübertragung vorteilhaft über den mechanischen Antriebszweig und eine Synchronisiereinrichtung auf einem der beiden hydrostatischen Antriebszweige, dessen Kupplung aber ausgerückt bleibt. Es werden damit Elemente auf dem hydrostatischen Antriebszweig auch zur Drehmomentübertragung über den jeweiligen mechanischen Antriebszweig genutzt. Es versteht sich, daß innerhalb dieses Bereiches der vorteilhaft hohe mechanische Wirkungsgrad des mechanischen Antriebszweiges genutzt wird. Die Drehzahl der Ausgangswelle, die die Fahr- und/oder Arbeitsgeschwindigkeit der fahrbaren Arbeitsmaschine bestimmt, ist damit von der Drehzahl des Verbrennungsmotors direkt abhängig.

Das neue Lastschaltgetriebe kommt mit einer sehr geringen Anzahl von Einzelkomponenten, wie Zahnräder, Wellen, Kupplungen, Synchronisiereinrichtungen u. dgl. aus. In allen wichtigen Geschwindigkeitsbereichen besteht die Möglichkeit, den mechanischen Antriebszweig allein zu nutzen. In Zwischenbereichen erfolgt beim Schalten keine Zugkraftunterbrechung. Wenn ein mechanischer Antriebszweig für die Drehmomentübertragung allein genutzt wird, ist die Verlustleistung besonders gering, weil auch die hydrostatischen Antriebszweige inaktiv sind, d. h. nicht nur die betreffenden Kupplungen ausgerückt sind, sondern auch die betreffenden Hydromotore nicht angetrieben werden.

Wenn in der Parallelanordnung zu den zwei steuerbaren hydrostatischen Antriebszweigen zwei wahlweise nutzbare mechanische Antriebszweige mit je einer vorgeschalteten und unter Last schaltbaren Kupplung vorgesehen sind, ergibt sich die Möglichkeit, beim Wechsel der einzelnen Fahrstufen die beiden mechanischen Antriebszweige jeweils mit unterschiedlichen Synchronisiereinrichtungen der hydrostatischen Antriebszweige und den jeweils nachgeschalteten Getriebestufen mehrfach zu nutzen, so daß weite Bereiche des Fahr- und Arbeitsspektrums durch mechanische Drehmomentübertragung genutzt werden können. Insbesondere dabei kann jeder mechanische Antriebszweig über mindestens je eine Synchronisiereinrichtung eines hydrostatischen Antriebszweiges und die zugehörige Getriebestufe mit der Ausgangswelle kuppelbar sein. Dies bedeutet, daß die betreffenden Synchronisiereinrichtungen bereits vor Einschaltung der Kupplung des jeweiligen mechanischen Antriebszweiges synchronisiert sind und insoweit nicht erst aktiviert werden müssen.

Das Spektrum der Fahr- und Arbeitsgeschwindigkeiten kann dadurch erhöht bzw. vergrößert werden, daß jeder hydrostatische Antriebszweig über mehrere Synchronisiereinrichtungen und Getriebestufen mit der Ausgangswelle kuppelbar ist. Je nach der Kombination des betreffenden mechanischen Antriebszweiges mit der betreffenden Synchronisiereinrichtung des betreffenden hydrostatischen Antriebszweiges ergibt sich über die Abhängigkeit der Drehzahl des verbrennungsmotors ein vorteilhaft mit hohem Wirkungsgrad nutzbarer Bereich.

Jeder mechanische Antriebszweig trägt nur je ein Zahnrad, das mit einem drehfest mit der Welle des jeweiligen hydrostatischen Antriebszweiges verbundenen Zahnrad eine Getriebestufe bildet.

Dies ist insofern von Vorteil, als damit etwa in gleicher Baulänge zwei mechanische Antriebszweige coaxial hintereinander angeordnet werden können, die zusammen etwa die Baulänge haben, die auch ein hydrostatischer Antriebszweig erfordert. Zudem ergibt sich dann die Möglichkeit, in einfacher Weise z. B. einen Zapfwellenantrieb durch den oder die mechanischen Antriebszweige hindurchzuführen, also coaxial anzuordnen, da die Ausgangswelle ohnehin achsversetzt angeordnet ist. Der axiale Versatz der Ausgangswelle ist infolge der Unterbringung der Getriebestufen erforderlich. Die Achse des Verbrennungsmotors kann dabei vorteilhaft coaxial zu den Achsen der mechanischen Antriebe sowie ggf. des Zapfwellenantriebs angeordnet werden. Achsversetzt dazu ergibt sich durch die versetzten Achsen der beiden hydrostatischen Antriebe einerseits und der Ausgangswelle andererseits eine Anordnung, die im Querschnitt etwa ein Viereck oder Quadrat bildet, so daß insgesamt die Baufläche auch in dieser Richtung optimal genutzt wird.

Das erfindungsgemäße Verfahren der eingangs beschriebenen Art kennzeichnet sich dadurch, daß während wesentlicher Geschwindigkeitsänderungen der Arbeitsmaschine die über das Lastschaltgetriebe zu übertragende Leistung allein über einen oder zwei Hydromotore hydrostatischer Antriebszweige auf die Ausgangswelle übertragen wird, daß während im wesentlichen konstanter Geschwindigkeiten oder innerhalb vorgegebener Geschwindigkeitsbereiche die über das Lastschaltgetriebe zu übertragende Leistung allein über einen mechanischen Antriebszweig übertragen wird, und daß die Aufteilung der Leistung auf einen mechanischen Antriebszweig und den einen oder die mehreren hydrostatischen Antriebszweige nur zur Einleitung oder zum Verlassen einer Leistungsübertragung über einen mechanischen Antriebszweig erfolgt.

Die Hydromotore und die Kupplungen der hydrostatischen Antriebszweige werden nur dann aktiviert, wenn wesentliche Geschwindigkeitsänderungen der Arbeitsmaschine erfolgen sollen. Die hydrostatischen Antriebszweige werden insoweit nur für Zwischenbereiche genutzt. Bei konstanten Fahrt- und/oder Arbeitsgeschwindigkeiten wird das Drehmoment zu 100 % allein über einen mechanischen Antriebszweig übertragen. Dies gilt für einen entsprechend großen Bereich in Abhängigkeit von der nutzbaren Drehzahl des Verbrennungsmotors. Dabei sind die Hydromotore und die Kupplungen der hydrostatischen Antriebszweige außer Funktion. Zwar wird die Pumpe für das Hydraulikmedium der beiden hydrostatischen Antriebszweige über den Verbrennungsmotor mit angetrieben. Da der Schwenkwinkel der Pumpe jedoch auf 0° eingestellt ist, ergibt sich eine vernachlässigbare Verlustleistung.

Wesentlich ist weiterhin, daß die beiden hydrostatischen Antriebszweige nicht zwangsweise miteinander gekuppelt sind, sondern separat und damit auch unterschiedlich steuerbar sind. Es besteht die Möglichkeit, daß die beiden Hydromotore der beiden hydrostatischen Antriebszweige mit unterschiedlichen Schwenkwinkeln gesteuert werden, insbesondere mit einem Schwenkwinkel = 0 an einem der Hydromotore. Da nur einer der Schwenkwinkel auf 0 eingestellt wird und somit der Schwenkwinkel des anderen Hydromotors von 0 verschieden ist, wird die betreffende hydraulische Leistung über den anderen hydrostatischen Antriebszweig übertragen. Damit werden hohe Drücke in der Pumpe vermieden, wie sie beim gleichzeitigen Einstellen beider Schwenkwinkel auf 0 im Stand der Technik auftreten.

Bei Kupplung eines mechanischen Antriebszweiges mit einem hydrostatischen Antriebszweig über eine Getriebestufe erfolgt die Synchronisierung durch Steuerung der Schwenkwinkel der Hydropumpe und des betreffenden Hydromotors. Über den betreffenden Hydromotor und den betreffenden hydrostatischen Antriebszweig wird dabei nur ein Teil der Leistung übertragen. Somit ist auch nur dieser Teil der Leistung mit dem vergleichsweise schlechteren Wirkungsgrad behaftet. In den Zeiten, in denen keine Leistung über den betreffenden hydrostatischen Antriebszweig übertragen wird, wird einerseits der Schwenkwinkel der Hydropumpe auf 0 verstellt und andererseits die Kupplung zwischen dem Hydromotor und der mechanischen Getriebestufe des hydrostatischen Antriebszweiges gelöst. Dies bedeutet jedoch nicht, daß andere Elemente des hydrostatischen Antriebszweiges nicht genutzt würden. Die betreffende Synchronisiereinrichtung und die nachgeschaltete Getriebestufe wird über den mechanischen Antriebszweig einer zusätzlichen Nutzung zugeführt.

Für die Erzeugung einer konstanten Drehzahl in einem mechanischen Antriebszweig werden die Fahrgeschwindigkeitsänderungen über einen oder beide hydrostatische Antriebszweige ausgesteuert. Beide hydrostatische Antriebszweige können gleichzeitig bzw. gemeinsam vorteilhaft dazu genutzt werden, um die Arbeitsmaschine in Bewegung zu setzen. Ist die Bewegung erreicht, genügt im allgemeinen nur die Nutzung eines der beiden hydrostatischen Antriebszweige, um einen Zwischenbereich der Drehmomentübertragung zu durchfahren.

Die Erfindung wird anhand bevorzugter Ausführungsbeispiele weiter erläutert und beschrieben. Es zeigen:
- Fig. 1: ein schematisches Blockschaltbild mit der Parallelanordnung mindestens eines mechanischen Antriebszweiges in Verbindung mit zwei hydrostatischen Antriebszweigen,
- Fig. 2: eine Prinzipskizze für die Anordnung der Elemente in den einzelnen Antriebszweigen,
- Fig. 3: eine ähnliche Prinzipskizze wie Fig. 2, jedoch nur mit einem mechanischen Antriebszweig,
- Fig. 4: eine prinzipielle Schnittdarstellung durch die Achsen der Antriebszweige und der Ausgangswelle,
- Fig. 5: eine Tabelle steigender Geschwindigkeitsbereiche für die Ausführungsform des Lastschaltgetriebes gemäß Fig. 2 und
- Fig. 6: ein Diagramm der Schwenkwinkel der Pumpe und der beiden Hydromotore über der Fahrgeschwindigkeit.

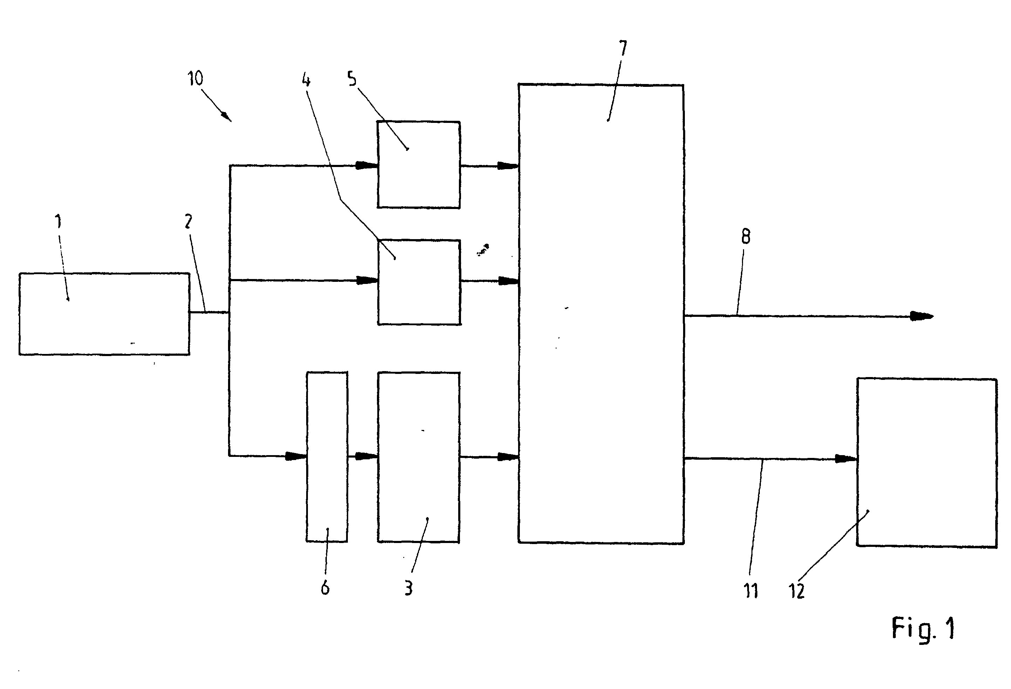

In Fig. 1 ist symbolhaft ein Verbrennungsmotor 1 mit seiner Welle 2 dargestellt, über die wirkungsmäßig der Fahr- und/oder Arbeitsantrieb der fahrbaren Arbeitsmaschine erfolgt. Der Antrieb weist einen mechanischen Direktantrieb 3 und zwei hydrostatische Antriebszweige 4 und 5 auf. Dem mechanischen Direktantrieb 3 kann ein Dämpfer 6 vorgeschaltet sein. Der Direktantrieb 3 und die beiden hydrostatischen Antriebszweige 4 und 5 sind wirkungsmäßig parallel zueinander angeordnet. Sie können einzeln oder gleichzeitig genutzt werden. Diesen Antrieben 3, 4 und 5 nachgeschaltet ist ein Getriebe 7 mit Ausgangswelle 8, über die in der Regel der Fahrantrieb abgegriffen wird. Die Welle 2 des Verbrennungsmotors 1 bildet zugleich eine Eingangswelle 9 eines Lastschaltgetriebes 10 mit den bisher beschriebenen Einzelheiten. Aus dem Getriebe 7 der Zapfwelle 11 nachgeordnet kann ein weiteres Getriebe 12 vorgesehen sein, um beispielsweise verschiedene Abtriebsdrehzahlen zu erzeugen und/oder die Drehrichtung ggf. auch umzukehren.

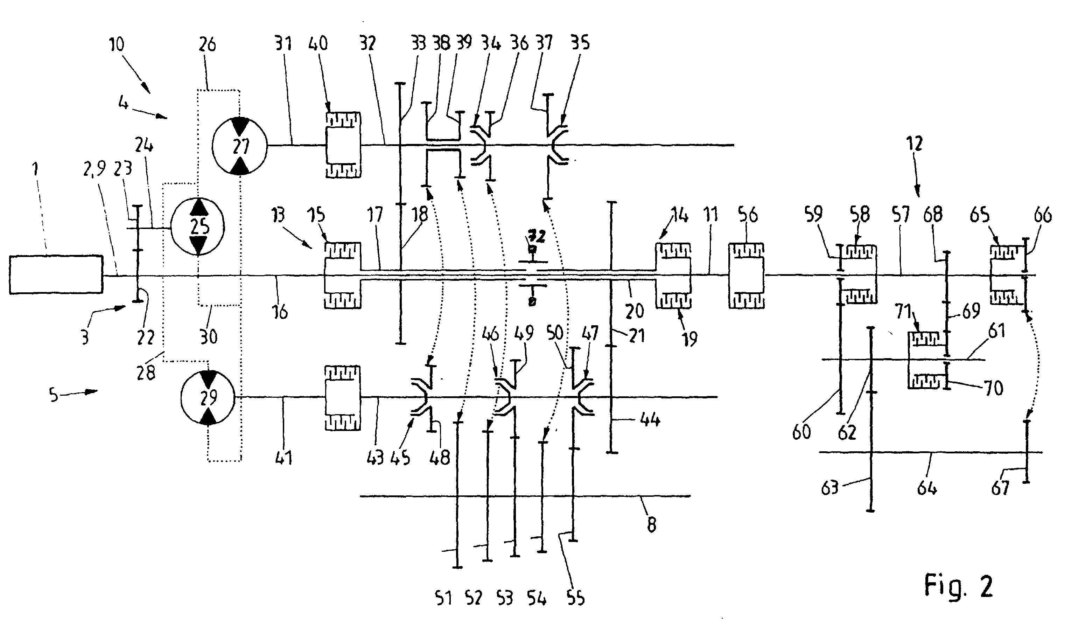

Wie Fig. 2 in etwas mehr gegenständlicher Ausführung erkennen läßt, ist das Lastschaltgetriebe 10 mit einer durchgehenden Welle versehen, die als Eingangswelle 9 beginnt und als Zapfwelle 11 endet. In der Achse dieser Welle ist der mechanische Direktantrieb 3 untergebracht, der axial hintereinander einen ersten mechanischen Antriebszweig 13 und axial dahinter einen zweiten mechanischen Antriebszweig 14 aufweist. Der erste mechanische Antriebszweig 13 besitzt eine Kupplung 15, deren eine Kupplungshälfte drehfest mit der Eingangswelle 9 bzw. einer damit drehfest verbundenen durchgehenden Welle 16 in Verbindung steht. Die andere Kupplungshälfte der Kupplung 15 ist mit einer Welle 17 drehfest verbunden, die zusätzlich in einem Lager gelagert ist und auf der ein Zahnrad 18 drehfest angeordnet ist. Der zweite mechanische Antriebszweig 14 ist entsprechend aufgebaut und umfaßt eine Kupplung 19, eine Welle 20 und ein Zahnrad 21.

Auch die beiden hydrostatischen Antriebszweige 4 und 5 sind über die Welle 2 des Verbrennungsmotors 1 antreibbar. Zu diesem Zweck sitzt auf der Welle 2 ein Zahnrad 22, welches mit einem Zahnrad 23 auf einer Pumpenwelle 24 einer Hydropumpe 25 kämmt. Von der Hydropumpe 25 führt eine hydraulische Leitung 26 zu einem Hydromotor 27, der zu dem ersten hydrostatischen Antriebszweig 4 gehört. Entsprechend führt eine hydraulische Leitung 28 zu einem Hydromotor 29 des zweiten hydrostatischen Antriebszweiges 5. Das hydraulische Medium wird über eine Rückleitung 30 zu der Hydropumpe 25 zurückgeführt.

Zu dem hydrostatischen Antriebszweig 4 gehört neben dem Hydromotor 27 eine Kupplung 40, deren eine Kupplungshälfte mit einer Motorwelle 31 drehfest verbunden ist, während die andere Kupplungshälfte drehfest mit einer Zweigwelle 32 in Verbindung steht. Auf der Zweigwelle 32 ist ein Zahnrad 33 angeordnet, welches mit dem Zahnrad 18 in Eingriff steht. Im Bereich des hydrostatischen Antriebszweiges 4 sind auf der Zweigwelle 32 die Hälften von zwei Synchronisiereinrichtungen 34 und 35 angeordnet bzw. drehfest mit der Zweigwelle 32 verbunden. Die Synchronisiereinrichtung 34 trägt ein Zahnrad 36, während die Synchronisiereinrichtung 35 ein Zahnrad 37 aufweist. Auf der Zweigwelle 32 sind weiterhin ein Zahnrad 38 und ein Zahnrad 39 vorgesehen. Die Zahnräder 38 und 39 sind drehfest miteinander verbunden, jedoch frei drehbar auf der Zweigwelle 32 gelagert.

Ähnlich ist auch der zweite hydrostatische Antriebszweig 5 aufgebaut. Eine Motorwelle 41, die mit dem Hydromotor 29 abtriebseitig verbunden ist, trägt eine Hälfte einer Kupplung 42. Die andere Hälfte der Kupplung 42 sitzt auf einer Zweigwelle 43, die andererseits ein Zahnrad 44 trägt, welches mit dem Zahnrad 21 des zweiten mechanischen Antriebszweiges 14 dauernd in Eingriff steht. Auch auf der Zweigwelle 43 sind in entsprechender Zuordnung zu Elementen auf der Zweigwelle 32 des hydrostatischen Antriebszweiges 4 mehrere Synchronisiereinrichtungen 45, 46 und 47 vorgesehen, von denen die einen Hälften jeweils drehfest mit der Zweigwelle 43 verbunden sind. Die andere Hälfte der Synchronisiereinrichtung 45 trägt ein Zahnrad 48, welches in dauerndem Eingriff zu dem Zahnrad 38 steht. Dies ist durch eine gepunktete Pfeillinie in Fig. 2 verdeutlicht. Die Synchronisiereinrichtung 46 weist ein Zahnrad 49 auf, und die Synchronisiereinrichtung 47 trägt ein Zahnrad 50. Die Synchronisiereinrichtungen 34, 35, 45, 46 und 47 sind auf die beiden hydrostatischen Antriebszweige 4 und 5 verteilt, so daß bei diesem Ausführungsbeispiel der hydrostatische Antriebszweig 4 zwei Synchronisiereinrichtungen 34 und 35 aufweist, während der hydrostatische Antriebszweig 5 drei Synchronisiereinrichtungen besitzt. Die Anzahl könnte auch umgekehrt verteilt sein oder auch übereinstimmen.

Mit der Ausgangswelle 8 sind fünf Zahnräder 51, 52, 53, 54 und 55 drehfest verbunden. Das Zahnrad 51 steht in dauerndem Eingriff mit dem Zahnrad 39 des hydrostatischen Antriebszweiges 4. Ebenso kämmt das Zahnrad 52 mit dem Zahnrad 36. Das Zahnrad .54 steht im Eingriff mit dem Zahnrad 37 des hydrostatischen Antriebszweiges 4. Verbindung zu dem hydrostatischen Antriebszweig 5 besteht über das Zahnrad 53, welches mit dem Zahnrad 49 der Synchronisiereinrichtung 46 kämmt. Entsprechend steht das Zahnrad 55 mit dem Zahnrad 50 der Synchronisiereinrichtung 47 in Verbindung.

Die Hydropumpe 25 und die beiden Hydromotore 27 und 29 sind solche nach Axialkolbenbauart mit veränderlich steuerbarem Schrägwinkel. Jeder der drei Schrägwinkel kann unabhängig von den anderen veränderlich eingestellt werden. Die veränderbare Einstellung umfaßt auch die Stellung 0. Bei den Kupplungen 15, 19, 40, 42 handelt es sich um unter Last schaltbare Kupplungen. Die Synchronisiereinrichtungen 34, 35, 45, 46, 47 bestehen jeweils aus zwei Synchronisierringen, die nur lastfrei geschaltet werden können. Obwohl die Kupplungen wie auch die Synchronisiereinrichtungen zum Einrücken bzw. Ausrücken ausgebildet sind, ist der Bauaufwand der Synchronisiereinrichtungen erheblich geringer als der Bauaufwand der Kupplungen.

Am Ende der Zapfwelle 11 des Lastschaltgetriebes 10 kann eine Kupplung 56 vorgesehen sein, über die das Getriebe 12 zugeschaltet wird. Das Getriebe 12 weist eine erste Welle 57 auf, die die eine Hälfte einer Kupplung 58 trägt, während die andere Hälfte der Kupplung 58 ein Zahnrad 59 aufweist. Das Zahnrad 59 steht mit einem Zahnrad 60 einer Welle 61 in Eingriff, die weiterhin ein Zahnrad 62 trägt. Das Zahnrad 62 steht mit einem Zahnrad 63 auf einer Welle 64 in Verbindung. Auf diesem Wege kann von der Welle 64 ein relativ langsamer Antrieb, z. B. für ein Arbeitswerkzeug, abgenommen werden. Zur Abnahme einer vergleichsweise hohen Drehzahl der Welle 64 dient eine Kupplung 65 mit Zahnrad 66, welches mit einem Zahnrad 67 auf der Welle 64 in Eingriff steht. Soll die Drehrichtung der Welle 64 umgekehrt werden, so erfolgt die Übertragung des Drehmomentes über ein Zahnrad 68 auf der Welle 57, ein Umkehrrad 69 und ein Zahnrad 70 an einer Kupplung 71. Die andere Hälfte der Kupplung 71 sitzt auf der Welle 61, so daß auch bei dieser umgekehrten Drehrichtung eine Getriebestufe aus den Zahnrädern 62 und 63 für den Antrieb der Welle 64 benutzt werden kann.

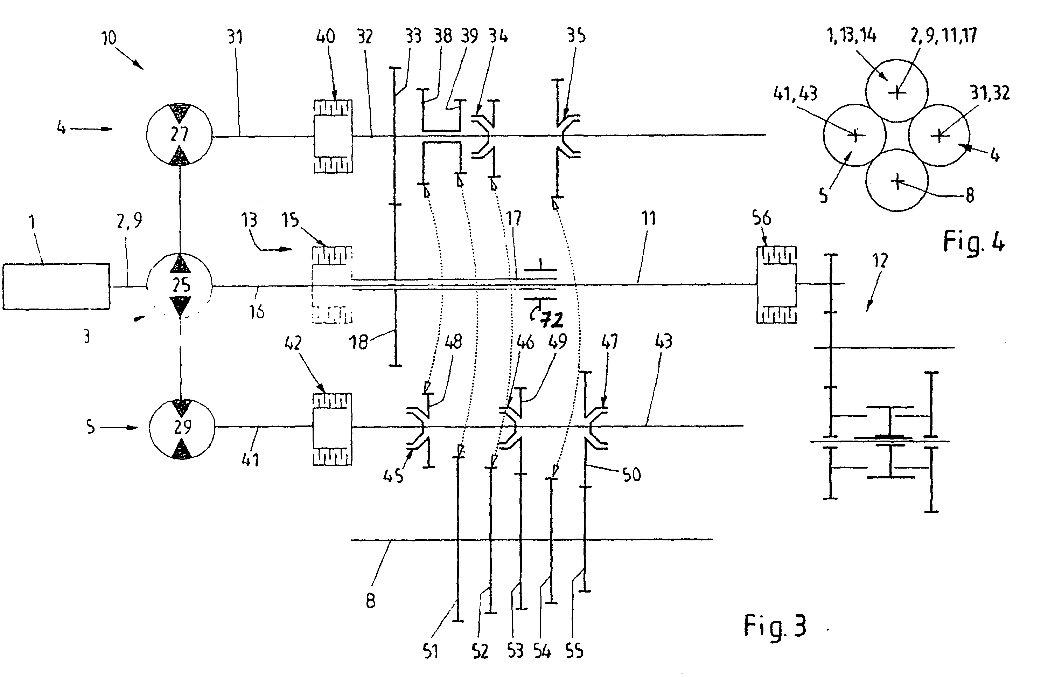

Die Ausführungsform des Lastschaltgetriebes 10 gemäß Fig. 3 entspricht in weiten Bereichen der Ausführungsform gemäß Fig. 2, weshalb hierauf verwiesen werden kann. Es fehlt lediglich der zweite mechanische Antriebszweig 14. Auch das Getriebe 12 ist hier etwas abweichend ausgebildet. Da es auf die Ausbildung des Getriebes 12 im einzelnen jedoch nicht ankommt, kann hier auf eine Erläuterung verzichtet werden, zumal die Funktion ohnehin aus der zeichnerischen Darstellung ersichtlich ist. Anhand der Fig. 3 ist auch leicht vorstellbar, daß im mechanischen Direktantrieb 3 auch der mechanische Antriebszweig 14 vorgesehen sein könnte, wobei dann gleichzeitig der mechanische Antriebszweig 13 fehlt.

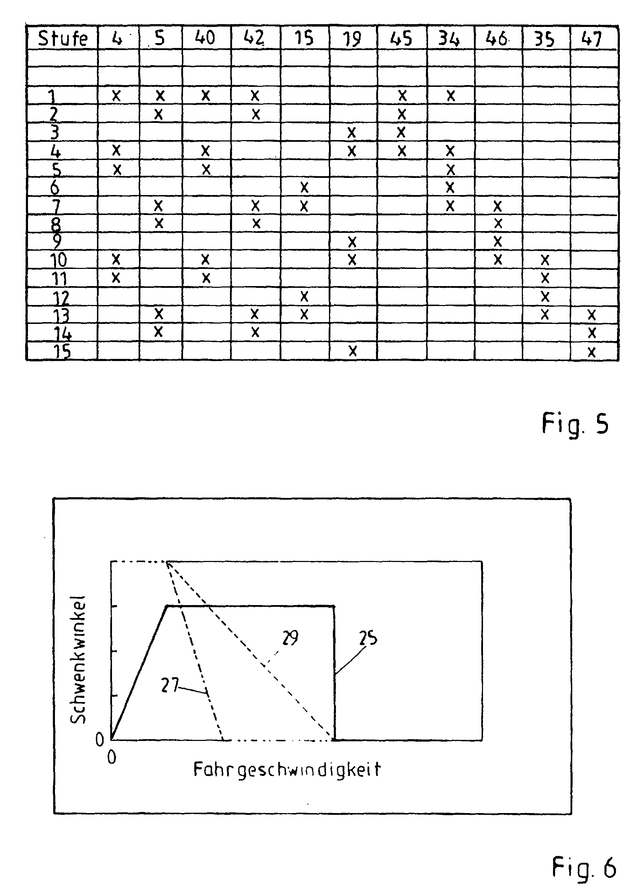

Die Funktion des Lastschaltgetriebes 10 gemäß Fig. 2 wird nachfolgend in Verbindung mit der Tabelle der Fig. 5 beschrieben. In der ersten Spalte sind verschiedene Fahrstufen 1 bis 15 angeführt, wie sie beim Losfahren der Arbeitsmaschine aus dem Stillstand bis zu einer Maximalgeschwindigkeit durchlaufen werden können. Die betreffenden Elemente sind in zugeordneten Spalten wiedergegeben, wobei die Einschaltung bzw. Aktivierung des betreffenden Elementes durch ein x angezeigt ist, während ein Leerraum eine Ausschaltung bzw. Inaktivierung bezeichnet.

Generell kann die von dem Verbrennungsmotor 1 bereitgestellte Leistung entweder hydrostatisch über eine oder beide hydrostatische Antriebszweige 4, 5 auf die Ausgangswelle 8 übertragen werden. Andererseits ist eine Übertragung über den mechanischen Direktantrieb 3, und zwar entweder über den mechanischen Antriebszweig 13 oder den mechanischen Antriebszweig 14, möglich. Da die Kupplungen 40, 42, 15, 19 separat schaltbar sind, ist auch eine kombinierte Leistungsübertragung hydrostatisch/mechanisch auf die Ausgangswelle 8 möglich. Aus dem Stand der Antriebsmaschine wird nach Starten des Verbrennungsmotors 1 über die Eingangswelle 9 und die Getriebestufe 22, 23 die Hydropumpe 25 angetrieben, so daß hydraulisches Medium den Hydromotoren 27 und 29 der beiden hydrostatischen Antriebszweige 4 und 5 zugeführt wird. Wie Fig. 5 erkennen läßt, sind beide hydrostatische Antriebszweige 4 und 5 aktiv. Auch die Kupplungen 40 und 42 sind eingerückt, während die Kupplungen 15 und 19 inaktiv sind. Es wird also Leistung ausschließlich über die beiden hydrostatischen Antriebszweige 4 und 5 übertragen. Je nach den eingestellten Schrägwinkeln an den Hydromotoren 27 und 29 erfolgt eine Leistungsaufteilung auf die beiden Antriebszweige 4 und 5. Der Anteil der Leistung, die über den hydrostatischen Antriebszweig 4 übertragen wird, erfolgt durch die eingerückte Kupplung 40 von der Motorwelle 31 auf die Welle 32 und über die Synchronisiereinrichtung 34 auf das Zahnrad 36 sowie über das Zahnrad 52 auf die Ausgangswelle 8. Der andere Teil der Leistung wird über den hydrostatischen Antriebszweig 5 übertragen. Dabei kuppelt die Kupplung 42 die Motorwelle 41 mit der Welle 43. Die aktive Synchronisiereinrichtung 45 bewirkt die Leistungsübertragung über die Zahnräder 48, 38, 39, 51 auf die Ausgangswelle 8. Die erste Fahrstufe wird durchfahren, wobei die Drehzahl des Verbrennungsmotors 1 gesteigert werden kann. Es sei besonders darauf hingewiesen, daß die Schrägwinkel der Hydromotore 27 und 29 unabhängig voneinander verstellt werden können. Dies geschieht gemäß Fahrstufe 2 nachfolgend in der Weise, daß bei entsprechend hoher bzw. maximaler Drehzahl des Verbrennungsmotors 1 die Kupplung 40 geöffnet und inaktiviert wird, wobei gleichzeitig der Schwenkwinkel des Hydromotors 27 auf 0 verschwenkt wird. Die Synchronisiereinrichtung 34 wird insoweit lastfrei und kann nunmehr geöffnet bzw. ausgerückt werden, so daß in der zweiten Fahrstufe die gesamte Leistung über den hydrostatischen Antriebszweig 5 auf die Ausgangswelle 8 übertragen wird, weil die Synchronisiereinrichtung 45 weiterhin aktiv bleibt und die Leistung über den bereits beschriebenen Weg übertragen wird. Dabei wird der Schwenkwinkel des Hydromotors 29 in der Weise verändert, daß sich die Fahrgeschwindigkeit an der Ausgangswelle 8 vergrößert. Bei einer bestimmten Drehzahl des Hydromotors 29 wird nun die Kupplung 19 des mechanischen Antriebszweiges 14 aktiviert bzw. eingerückt und die Kupplung 42 des hydrostatischen Antriebszweiges 5 geöffnet, wobei gleichzeitig der Hydromotor 29 wie auch die Hydropumpe 25 auf den Schwenkwinkel 0 verstellt werden. In dieser dritten Fahrstufe erfolgt die Leistungsübertragung ausschließlich über den mechanischen Antriebszweig 14 unter Ausnutzung des günstigen hohen Wirkungsgrades. In den hydrostatischen Antriebszweigen 4 und 5 fällt keine Verlustleistung an. Die Synchronisiereinrichtung 45, die an sich zu dem hydrostatischen Antriebszweig 5 gehört, wird hier für die Übertragung der Leistung im mechanischen Antriebszweig 14 genutzt. Diese Nutzung kann deshalb erfolgen, weil die Synchronisiereinrichtung 45 bereits bei der vorangehenden Fahrstufe 2 aktiviert war.

In Vorbereitung auf die Fahrstufe 4 kann nun ohne weiteres in dem hydrostatischen Antriebszweig 4 die Synchronisiereinrichtung 34 eingeschaltet werden, was ohne Last geschieht und zunächst auch ohne Auswirkung ist. Sobald jedoch die Kupplung 40 nachfolgend eingerückt wird, wird die Fahrstufe 4 erreicht, und ein Teil der Leistung wird über den mechanischen Antriebszweig 14 und der andere Teil der Leistung über den hydrostatischen Antriebszweig 4 übertragen. Zum Erreichen der Fahrstufe 5 wird die Kupplung 19 ausgerückt, so daß nunmehr die gesamte Leistung über den hydrostatischen Antriebszweig 4 und die Synchronisiereinrichtung 34 übertragen wird. In der Fahrstufe 6 kommt der andere mechanische Antriebszweig 13 zur Einwirkung, indem die Kupplung 15 eingerückt wird und die Synchronisiereinrichtung 34 eingerückt bleibt. Die Leistung wird somit über die Zahnräder 18, 33, die Synchronisiereinrichtung 34 und die Zahnräder 36, 52 auf die Ausgangswelle 8 übertragen.

Anhand dieser anfänglichen Beschreibung ist leicht nachvollziehbar, wie auch die übrigen Fahrstufen bis zur Höchstgeschwindigkeit in der Fahrstufe 15 geschaltet werden. Aus Fig. 5 ist erkennbar, daß die Leistungsübertragung in den Fahrstufen 3, 6, 9, 12 und 15 rein auf mechanischen Wege erfolgt. Die Steuerung ist so aufgebaut, daß diese Fahrstufen in großen Bereichen genutzt werden, während die übrigen Fahrstufen nur Durchgangsfahrstufen darstellen, die den Übergang in engen Bereichen darstellen. Die Ausbildung des Lastschaltgetriebes 10 ermöglicht es, jeweils eine Synchronisiereinrichtung lastlos zu aktivieren, damit über diese aktivierte Synchronisiereinrichtung dann in der sich anschließenden Fahrstufe durch Aktivierung einer Kupplung die betreffende Leistung übertragen wird.

In Verbindung mit den voranstehenden Ausführungen ist der Zusammenhang zwischen der Fahrgeschwindigkeit und den Schwenkwinkeln der Hydropumpe 25 und der Hydromotore 27 und 29 zu sehen. Hieraus ist auch erkennbar, daß die Schwenkwinkel der beiden Hydromotore 27 und 29 unabhängig voneinander zeitlich in unterschiedlicher Weise verstellt werden, um die Fahrstufen nacheinander zu durchlaufen.

### BEZUGSZEICHENLISTE

- 1 -: Verbrennungsmotor
- 2 -: Welle
- 3 -: mechanischer Direktantrieb
- 4 -: hydrostatischer Antriebszweig
- 5 -: hydrostatischer Antriebszweig
- 6 -: Dämpfer
- 7 -: Getriebe
- 8 -: Ausgangswelle
- 9 -: Eingangswelle
- 10 -: Lastschaltgetriebe

- 11 -: Zapfwelle
- 12 -: Getriebe
- 13 -: mech. Antriebszweig
- 14 -: mech. Antriebszweig
- 15 -: Kupplung
- 16 -: Welle
- 17 -: Welle
- 18 -: Zahnrad
- 19 -: Kupplung
- 20 -: Welle

- 21 -: Zahnrad
- 22 -: Zahnrad
- 23 -: Zahnrad
- 24 -: Pumpenwelle
- 25 -: Hydropumpe
- 26 -: Leitung
- 27 -: Hydromotor
- 28 -: Leitung
- 29 -: Hydromotor
- 30 -: Rückleitung

- 31 -: Motorwelle
- 32 -: Zweigwelle
- 33 -: Zahnrad
- 34 -: Synchronisiereinrichtung
- 35 -: Synchronisiereinrichtung
- 36 -: Zahnrad
- 37 -: Zahnrad
- 38 -: Zahnrad
- 39 -: Zahnrad
- 40 -: Kupplung

- 41 -: Motorwelle
- 42 -: Kupplung
- 43 -: Zweigwelle
- 44 -: Zahnrad
- 45 -: Synchronisiereinrichtung
- 46 -: Synchronisiereinrichtung
- 47 -: Synchronisiereinrichtung
- 48 -: Zahnrad
- 49 -: Zahnrad
- 50 -: Zahnrad

- 51 -: Zahnrad
- 52 -: Zahnrad
- 53 -: Zahnrad
- 54 -: Zahnrad
- 55 -: Zahnrad
- 56 -: Kupplung
- 57 -: Welle
- 58 -: Kupplung
- 59 -: Zahnrad
- 60 -: Zahnrad

- 61 -: Welle
- 62 -: Zahnrad
- 63 -: Zahnrad
- 64 -: Welle
- 65 -: Kupplung
- 66 -: Zahnrad
- 67 -: Zahnrad
- 68 -: Zahnrad
- 69 -: Umkehrrad
- 70 -: Zahnrad

- 71 -: Kupplung
- 72 -: Lager

## Patentansprüche

1. Lastschaltgetriebe (10) für eine fahrbare Arbeitsmaschine, insbesondere für ein Fahrzeug der Land- oder Bauwirtschaft, mit einer von einem Verbrennungsmotor (1) angetriebenen Eingangswelle (9) und einer Ausgangswelle (8), zwischen denen mindestens ein hydrostatischer Antriebszweig (4) und mindestens ein mechanischer Antriebszweig (13) parallel zueinander vorgesehen sind, **dadurch gekennzeichnet, daß** in der Parallelanordnung zwei separate hydrostatische Antriebszweige (4, 5) vorgesehen sind, die jeweils eine separate Welle (32, 43) aufweisen und über Synchronisiereinrichtungen (34, 35, 45, 46, 47) und Getriebestufen mit der Ausgangswelle (8) kuppelbar sind, und daß sowohl der mechanische Antriebszweig (13) als auch die beiden hydrostatischen Antriebszweige (4, 5) je eine eingangsseitig angeordnete und unter Last schaltbare Kupplung (15, 40, 42) aufweisen.

2. Lastschaltgetriebe nach Anspruch 1, **dadurch gekennzeichnet, daß** in der Parallelanordnung zu den zwei steuerbaren hydrostatischen Antriebszweigen (4, 5) zwei wahlweise nutzbare mechanische Antriebszweige (13, 14) mit je einer vorgeschalteten und unter Last schaltbaren Kupplung (15, 19) vorgesehen sind.

3. Lastschaltgetriebe nach Anspruch 1 oder 2, **dadurch gekennzeichnet, daß** der bzw. jeder mechanische Antriebszweig (13, 14) uber mindestens je eine Synchronisiereinrichtung (34, 45) eines hydrostatischen Antriebszweiges (4, 5) und die zugehörige Getriebestufe (18, 33; 21, 44) mit der Ausgangswelle (8) kuppelbar ist.

4. Lastschaltgetriebe nach Anspruch 1, **dadurch gekennzeichnet, daß** jeder hydrostatische Antriebszweig (4, 5) über mehrere Synchronisiereinrichtungen (34, 35; 45, 46, 47) und Getriebestufen (36, 52; 37, 54; 48, 38, 39, 51; 49, 53; 50, 55) mit der Ausgangswelle (8) kuppelbar ist.

5. Lastschaltgetriebe nach einem der Ansprüche 1 bis 4, **dadurch gekennzeichnet, daß** der bzw. jeder mechanische Antriebszweig (13, 14) nur je ein Zahnrad (18, 21) trägt, das mit einem drehfest mit der Welle (32, 43) des jeweiligen hydrostatischen Antriebszweiges (4, 5) verbundenen Zahnrad (33, 44) eine Getriebestufe (18, 33; 21, 44) bildet.

6. Verfahren zum Steuern eines Lastschaltgetriebes (10) für eine fahrbare Arbeitsmaschine, insbesondere für ein Fahrzeug der Land- oder Bauwirtschaft, indem ein Teil der Leistung über einen mechanischen Antriebszweig (13) und der andere Teil der Leistung über einen einen Hydromotor (27) aufweisenden hydrostatischen Antriebszweig (4) auf eine gemeinsame Ausgangswelle (8) übertragen werden, **dadurch gekennzeichnet, daß** während wesentlicher Geschwindigkeitsänderungen der Arbeitsmaschine die über das Lastschaltgetriebe (10) zu übertragende Leistung allein über einen oder zwei Hydromotore (27, 29) hydrostatischer Antriebszweige (4, 5) auf die Ausgangswelle (8) übertragen wird, daß während im wesentlichen konstanter Geschwindigkeiten oder innerhalb vorgegebener Geschwindigkeitsbereiche die über das Lastschaltgetriebe (10) zu übertragende Leistung allein über einen mechanischen Antriebszweig (13 oder 14) übertragen wird, und daß die Aufteilung der Leistung auf einen mechanischen Antriebszweig (13 oder 14) und den einen oder die mehreren hydrostatische Antriebszweige (4, 5) nur zur Einleitung oder zum Verlassen einer Leistungsübertragung über einen mechanischen Antriebszweig (13 oder 14) erfolqt.

7. Verfahren nach Anspruch 6, **dadurch gekennzeichnet, daß** die beiden Hydromotore (27, 29) der beiden hydrostatischen Antriebszweige (4, 5) mit unterschiedlichen Schwenkwinkeln gesteuert werden, insbesondere mit einen schwenkwinkel = 0 an einem der Hydromotore.

8. Verfahren nach Anspruch 6 oder 7, **dadurch gekennzeichnet, daß** bei Kupplung eines mechanischen Antriebszweiges (13 oder 14) mit einem hydrostatischen Antriebszweig (4 oder 5) über eine Getriebestufe die Synchronisierung durch Steuerung der Schwenkwinkel der Hydropumpe (25) und des betreffenden Hydromotors (27 oder 29) erfolgt.

9. Verfahren nach' einem der Ansprüche 6 bis 8, **dadurch gekennzeichnet, daß** in den Zeiten, in denen keine Leistung über den betreffenden hydrostatischen Antriebszweig (4, 5) übertragen wird, einerseits der Schwenkwinkel der Hydropumpe (25) auf 0 verstellt wird und andererseits die Kupplung (40, 42) zwischen dem Hydromotor (27, 29) und der mechanischen Getriebestufe des hydrostatischen Antriebszweiges (4, 5) gelöst wird.

10. Verfahren nach einem der Ansprüche 6 bis 9, **dadurch gekennzeichnet, daß** für die Erzeugung einer konstanten Drehzahl in einem mechanischen Antriebszweig (13 oder 14) die Fahrgeschwindigkeitsänderungen über einen oder beide hydrostatische Antriebszweige (4, 5) ausgesteuert werden.

## Claims

1. Power shift transmission (10) for a movable work machine, especially for an agricultural vehicle or for a construction machine, the power shift transmission comprising an input shaft (9) driven by an engine (1), an output shaft (8), at least one mechanical drive line (13) and at least one hydrostatic drive line (4), the mechanical drive line and the hydrostatic drive line being arranged in parallel between the input shaft and the output shaft, **wherein** two separate hydrostatic drive lines (4, 5) are arranged in parallel, each of the hydrostatic drive lines comprising a separate shaft (32, 43) and being designed to be coupled to the output shaft (8) via synchronizing devices (34, 35, 45, 46, 47) and gear units, and power shift clutches (15, 40, 42) are arranged at the input ends of the mechanical drive line (13) and the two hydrostatic drive lines (4, 5) each.

2. Power shift transmission of claim 1, **wherein** two alternatively working mechanical drive lines (13, 14) are provided, having a power shift clutch (15, 19) each arranged at their input ends and the mechanical drive lines being arranged in parallel to the two controllable hydrostatic drive lines (4, 5).

3. Power shift transmission of claim 1 or 2, **wherein** the mechanical drive line or each of the mechanical drive lines (13, 14), respectively, is designed to be coupled to the output shaft (8) via at least one of the synchronizing devices (34, 45) of one of the hydrostatic drive lines (4, 5) and the corresponding gear unit (18, 33; 21, 44).

4. Power shift transmission of claim 1, **wherein** each of the hydrostatic drive lines (4, 5) is designed to be coupled to the output shaft (8) via a plurality of synchronizing devices (34, 35; 45, 46, 47) and gear units (36, 52; 37, 54; 48, 38, 39, 51; 49, 53; 50, 55).

5. Power shift transmission of one of the claims 1 to 4, **wherein** the mechanical drive line or each mechanical drive line (13, 14), respectively, comprises only one gear (18, 21) forming a gear unit (18, 33; 21, 44) with a gear (33, 44) mechanically connected to a shaft (32, 43) of the corresponding hydrostatic drive line (4, 5).

6. Method for controlling a power shift transmission (10) for a movable work machine, especially for an agricultural vehicle or for a construction machine, the method comprising the steps of:
transmitting one part of the power to a common output shaft (8) via a mechanical drive line (13) and the other part of the power via a hydrostatic drive line (4) having a hydraulic motor (27), **wherein**
during a substantial change of velocity of the movable work machine the power to be transmitted by the power shift transmission (10) is exclusively transmitted to the output shaft (8) via one or two hydraulic motors (27, 29) of the hydrostatic drive lines (4, 5),
during substantially constant velocities or within predetermined velocity ranges of the movable work machine the power to be transmitted by the power shift transmission (10) is exclusively transmitted via one of the mechanical drive lines (13 or 14),
and wherein the power is split between one of the mechanical drive lines (13 or 14) and the one or more hydrostatic drive lines (4, 5) only to initiate or to complete the power transmission via one of the mechanical drive lines (13 or 14).

7. Method of claim 6, **wherein** the two hydraulic motors (27, 29) of the two hydrostatic drive lines (4, 5) are controlled with different turning angles, especially with a turning angle of zero at one of the two hydraulic motors.

8. Method of claim 6 or 7, **wherein** the synchronization is attained by controlling the turning angle of the hydraulic pump (25) and the respective hydraulic motor (27 or 29) during coupling one mechanical drive line (13 or 14) to one hydrostatic drive line (4 or 5) via a gear unit.

9. Method of one of the claims 6 to 8, **wherein** the turning angle of the hydraulic pump (25) is adjusted to zero and a clutch (40, 42) operatively arranged between the hydraulic motor (27, 29) and the mechanical gear unit of the hydrostatic drive line (4, 5) is disengaged when no power is transmitted via the respective hydrostatic drive line (4, 5).

10. Method of one of the claims 6 to 9, **wherein** the changes of velocity are controlled via one or both of the hydrostatic drive lines (4, 5) to attain a constant number of revolutions in one of the mechanical drive lines (13 or 14).

## Revendications

1. Transmission à changement de vitesse sous puissance (10) pour une machine de travail mobile, en particulier pour un véhicule destiné à l'agriculture ou à la construction, avec un arbre d'entrée (9) entraîné par un moteur à combustion interne (1) et un arbre de sortie (8), entre lesquels il est prévu au moins une branche motrice hydrostatique (4) et au moins une branche motrice mécanique (13) montées en parallèle l'une à l'autre, **caractérisée en ce qu'**il est prévu dans le montage parallèle deux branches motrices hydrostatiques séparées (4, 5), qui présentent chacune un arbre séparé (32, 43) et qui peuvent être couplées à l'arbre de sortie (8) par des dispositifs de synchronisation (34, 35, 45, 46, 47) et par des étages de transmission, et **en ce qu'**aussi bien la branche motrice mécanique (13) que les deux branches motrices hydrostatiques (4, 5) présentent chacune un accouplement (15, 40, 42) disposé vers l'entrée et pouvant être embrayé en charge.

2. Transmission à changement de vitesse sous puissance suivant la revendication 1, **caractérisé en ce qu'**il est prévu, dans le montage parallèle des deux branches motrices hydrostatiques pouvant être commandées (4, 5), deux branches motrices mécaniques (13, 14) utilisables au choix comportant chacune un accouplement (15, 19) placé en tête et pouvant être embrayé en charge.

3. Transmission à changement de vitesse sous puissance suivant la revendication 1 ou 2, **caractérisée en ce que** la, respectivement chaque, branche motrice mécanique (13; 14) peut être couplée à l'arbre de sortie (8) par au moins chaque fois un dispositif de synchronisation (34, 45) d'une branche motrice hydrostatique (4, 5) et l'étage de transmission correspondant (18, 33; 21, 44).

4. Transmission à changement de vitesse sous puissance suivant la revendication 1, **caractérisée en ce que** chaque branche motrice hydrostatique (4, 5) peut être couplée à l'arbre de sortie (8) par plusieurs dispositifs de synchronisation (34, 35; 45, 46, 47) et plusieurs étages de transmission (36, 52; 37, 54; 48, 38, 39, 51; 49, 53; 50, 55).

5. Transmission à changement de vitesse sous puissance suivant l'une quelconque des revendications 1 à 4, **caractérisée en ce que** la, respectivement chaque, branche motrice mécanique (13, 14) ne porte chaque fois qu'une seule roue dentée (18, 21), qui forme un étage de transmission (18, 33; 21, 44) avec une roue dentée (33, 44) calée sur l'arbre (32, 43) de la branche motrice hydrostatique respective (4, 5).

6. Procédé pour commander une transmission à changement de vitesse sous puissance (10) pour une machine de travail mobile, en particulier pour un véhicule destiné à l'agriculture ou à la construction, dans lequel une partie de la puissance est transmise à un arbre de sortie commun (8) par une branche motrice mécanique (13) et l'autre partie de la puissance est transmise par une branche. motrice hydrostatique (4) comportant un moteur hydraulique (27), **caractérisé en ce que**, pendant des variations de vitesse importantes de la machine de travail, la puissance à transmettre par la transmission à changement de vitesse sous puissance (10) est transmise à l'arbre de sortie (8) uniquement par un ou deux moteur(s) hydraulique(s) (27, 29) de branches motrices hydrostatiques (4, 5), **en ce que**, pendant des vitesses sensiblement constantes ou à l'intérieur de domaines de vitesse prédéterminés, la puissance à transmettre par la transmission à changement de vitesse sous puissance (10) est transmise uniquement par une branche motrice mécanique (13 ou 14), et **en ce que** la distribution de la puissance sur une branche motrice mécanique (13 ou 14) et sur une ou plusieurs branche(s) motrice(s) hydrostatique(s) (4, 5) n'est effectuée que pour l'introduction ou l'abandon d'une transmission de puissance par une branche motrice mécanique (13 ou 14).

7. Procédé suivant la revendication 6, **caractérisé en ce que** les deux moteurs hydrauliques (27, 29) des deux branches motrices hydrostatiques (4, 5) sont commandés avec des angles de rotation différents, en particulier avec un angle de rotation = 0 à l'un des moteurs hydrauliques.

8. Procédé suivant la revendication 6 ou 7, **caractérisé en ce que**, en cas de couplage d'une branche motrice mécanique (13 ou 14) avec une branche motrice hydrostatique (4 ou 5) par un étage de transmission, la synchronisation est effectuée par la commande des angles de rotation de la pompe hydraulique (25) et du moteur hydraulique concerné (27 ou 29).

9. Procédé suivant l'une quelconque des revendications 6 à 8, **caractérisé en ce que**, pendant les périodes au cours desquelles aucune puissance n'est transmise par la branche motrice hydrostatique concernée (4, 5), d'une part l'angle de rotation de la pompe hydraulique (25) est réglé à 0 et d'autre part l'accouplement (40, 42) entre le moteur hydraulique (27, 29) et l'étage de transmission mécanique de la branche motrice hydrostatique (4, 5) est débrayé.

10. Procédé suivant l'une quelconque des revendications 6 à 9, **caractérisé en ce que**, pour la production d'une vitesse de rotation constante dans une branche motrice mécanique (13 ou 14), les variations de la vitesse de circulation sont réglées par une ou par les deux branches motrices hydrostatiques (4, 5).
